# EUROPEAN PATENT APPLICATION

(11) **EP 2 680 567 A1**
(43) Date of publication of application: **01.01.2014**
(21) Application number: 12173448.7
(22) Date of filing: 25.06.2012
(51) Int. Cl.: H04N 5/217, H04N 5/232, H04N 5/357, G06T 5/00

(54) **Video noise reduction**

(71) Applicant: Axis AB, 223 69 Lund (SE)
(72) Inventor: Östlund, Petter, 226 48 Lund (SE)
(74) Representative: Johansson, Magnus

(57) **Abstract**

Noise is reduced in video frames captured by an image sensor (103) of a monitoring camera (100) by using image data representing a captured video frame (302) and image data representing a previously captured video frame (304) at least partially overlapping the captured video frame (302), as well as motion data representing global motion vectors for the captured video frame (302) in relation to the previously captured video frame (304). The captured video frame (302) and the previously captured video frame (304) are spatially aligned using the global motion vectors to provide a set of spatially aligned video frames, and temporal noise reduction is performed on the captured video frame using the spatially aligned set of video frames to provide a temporally noise reduced captured video frame.

## Description

### Technical field

The present invention relates to methods and devices for noise reduction of video frames.

### Background

Surveillance cameras are currently used in many different applications, for monitoring environments both indoors and outdoors. To give a useful picture of the monitored environment also in difficult imaging situations, different types of noise reduction may be used to enhance and improve the image data. One example of such noise reduction is temporal noise reduction.

US 2007/0070250 discloses a temporal noise reduction method where the overall gain of the temporal filtering is adjusted based on global motion.

As noise reduction is an important factor in improving the usefulness of image data from surveillance cameras, improvements in this area are always of interest.

### Summary

An object of the present invention is to improve the quality of images captured by a monitoring camera.

This and further objects are achieved by a method of reducing noise in video frames captured by a monitoring camera according to claim 1, by means of a video noise reducer according to claim 6, and by means of a monitoring camera according to claim 10. Further embodiments of the invention are presented in the dependent claims.

In particular, according to a first aspect of the invention, a method of reducing noise in video frames captured by an image sensor of a monitoring camera, comprises the steps of:
accessing image data representing a captured video frame,
accessing image data representing a previously captured video frame at least partially overlapping the captured video frame,
accessing motion data representing global motion vectors for the captured video frame in relation to the previously captured video frame,
spatially aligning the captured video frame and the previously captured video frame using the global motion vectors to provide a set of spatially aligned video frames, and
performing temporal noise reduction on the captured video frame using the spatially aligned set of video frames to provide a temporally noise reduced captured video frame.

In this way temporal noise reduction may be used also in a case where relative movement occurs between the camera and large parts of a scene. Thereby the image quality is enhanced and the usefulness of the video is improved.

The method may further include the step of performing image stabilization of the captured video frame, wherein the global motion vectors are established as part of the image stabilization step. In this case these global motion vectors may serve a dual purpose, being used both for image stabilization and to improve the temporal noise reduction.

The step of performing temporal noise reduction may comprise accessing data representing local motion information for the captured video frame in relation to the previously captured video frame, and excluding areas of the captured video frame from the temporal noise reduction where the local motion information indicates a moving object. In this case pixels or image elements which represent an object moving across the scene may be excluded from the temporal noise reduction, which further improves the functioning of the temporal noise reduction.

The step of performing temporal noise reduction further may comprise providing the temporally noise reduced video frame by calculating an average of the set of spatially aligned video frames. In this way random noise varying over time may be cancelled out or at least reduced.

The step of spatially aligning the captured video frame and the previously captured video frame may comprise accessing image data from an image sensor border area provided for image stabilization purposes. In this way the temporal noise reduction may be performed on a larger part of the captured video frame, possibly even the entire video frame.

According to a second aspect of the invention, a video noise reducer for reducing noise in video frames captured by an image sensor of a monitoring camera, comprises
an image data input arranged to receive information representing a captured video frame and a previously captured video frame at least partially overlapping the captured video frame,
a motion data input arranged to receive information representing global motion vectors for the captured video frame in relation to the previously captured video frame,
a spatial aligner arranged to spatially align the captured video frame and the previously captured video frame using the global motion vectors to provide a set of spatially aligned video frames, and
a temporal noise reducer arranged to perform temporal noise reduction on the captured video frame using the spatially aligned set of video frames to provide a temporally noise reduced captured video frame.

The motion data input may further be arranged to receive data representing local motion information for the captured video frame in relation to the previously captured video frame, and the temporal noise reducer may further be arranged to exclude areas of the captured video frame from the temporal noise reduction where the local motion information indicates a moving object. In this way the temporal noise reduction is improved by taking into account the occurrence of moving objects in the scene.

The temporal noise reducer may be arranged to provide the temporally noise reduced captured video frame by calculating an average of the set of spatially aligned video frames. This gives the possibility to cancel out or at least reduce random noise varying over time.

The image data input may further be arranged to receive image data captured by an image sensor border area, and the spatial aligner may further be arranged to use image data from the image sensor border area. As mentioned above, in this way the temporal noise reduction may be performed on a larger part of the captured video frame, possibly even the entire video frame.

According to some embodiment of the invention a monitoring camera comprises an image sensor and a video noise reducer described above.

The monitoring camera may further comprise an image stabilizer arranged to perform image stabilization of the captured video frame and to establish the global motion vectors as part of the image stabilization. These global motion vectors may then be used both for the image stabilization and for the temporal noise reduction according to embodiments of the present invention. In other words, less additional hardware and/or software is needed.

The image sensor may comprise a border area for image stabilization purposes. This border area makes it possible to use information outside the overlapping parts of the video frames when spatially aligning the video frames. The border area is also used for image stabilization purposes, and, thus, serves a dual purpose, or, in other words, less additional hardware and/or software need to be provided.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description. Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a sensor" or "the sensor" may include several sensors, and the like. Furthermore, the word "comprising" does not exclude other elements or steps.

### Brief description of the drawings

Other features and advantages of the present invention will become apparent from the following detailed description of presently preferred embodiments, with reference to the accompanying drawings, in which:
Fig 1 schematically illustrates a monitoring camera.
Fig. 2 illustrates a method according to embodiments of the invention.
Fig. 3 illustrates an image sensor.

### Detailed description of embodiments of the invention

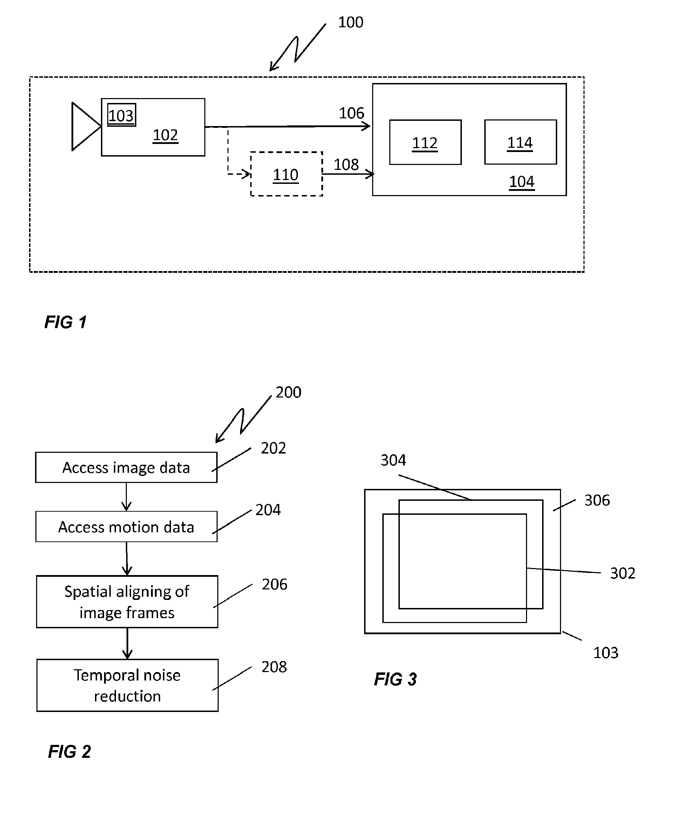

Embodiments of the present invention may be implemented in an imaging device capturing video of a scene, e.g. a mechanically or digitally pan- and tiltable monitoring camera 100, parts of which are shown in Fig 1. Alternatively, embodiments of the invention may be implemented in any device implementing functions reducing noise in video frames, e.g. in a video encoding device, a video server, a video processing device, etc. Further, it should be noted that the different parts of the video noise reducer may be implemented either in software or in hardware, or in a combination thereof.

The camera 100 includes an image capturing unit 102 arranged to capture images, in the form of sequences of video frames, of a scene. The image capturing means 102 comprises an image sensor 103 for registering image data, and may further comprise a number of conventional components not illustrated in the figures, such as a lens, an image processor for processing image data registered by the image sensor 103, and a memory of any suitable type such as a RAM (Random Access Memory), a hard disc drive or a flash memory etc, for storing processed image data.

Image data, or, more precisely, information representing captured video frames, is fed to a video noise reducer 104 via an image data input 106. More in detail, in the embodiments presented herein, a captured video frame and a previously captured video frame are fed to the video noise reducer 104.

The video noise reducer 104 comprises a temporal noise reducer 114 which may be arranged to improve the quality of images by averaging image elements, e.g. pixels, over at least two video frames to remove temporal noise, i.e. noise which changes over time and which appear randomly in different image elements.

In temporal noise reduction, local motion vectors may be produced which describe motion between two consecutive video frames. These local motion vectors could e.g. indicate that a bird flying across the monitored scene has moved between two frames. The pixels of a frame which are associated with such local motion vectors may then be excluded from the averaging in the temporal noise reduction. Alternatively, any other temporal noise reduction method may be used.

In the monitoring camera discussed herein, motion data, or, more precisely, information representing global motion vectors for the captured video frame in relation to the previously captured video frame, is also fed to the video noise reducer 104 via a motion data input 108.

The motion data may be produced by an image stabilizer 110, which is shown in dashed lines to indicate that this is an optional feature of the monitoring camera. The image stabilizer 110 may perform stabilizing of images in conventional manner, and the global motion vectors for the video frames may be established as part of the image stabilizing functionality. As an alternative the global motion vectors may also be established or calculated separately from image stabilization, e.g. in a case where image stabilizing functionality is not implemented in the monitoring camera. The global motion vectors may be established via some sort of image processing. One example is by using local motion vectors of sub-images which in turn are obtained by techniques such as block matching or edge pattern matching. Another option is to use an iterative, multi-resolution motion estimation scheme, e.g. using multi-resolution pyramids. Yet another option is to use mechanical motion detection, e.g. with an electronic micro chip-packed gyroscope, such as a micro-electromechanical system, MEMS. The global motion vectors may also be established using methods similar to those used in the H.264 and MPEG standards for video compression.

The global motion vectors describe the amount of global motion that has taken place in the time between the capture of two video frames. This motion may e.g. be caused by the camera being placed on a moving vehicle or on a post swaying in the wind, or when a large part of the scene moves. In other words, global motion vectors indicate the movement of an entire frame, or at least a main part thereof, indicating that the entire scene has moved in relation to the camera, or vice versa, since the last video frame was captured.

In the video noise reducer 104, the global motion vectors are now used to spatially align the captured video frame and the previously captured video frame to provide a set of spatially aligned video frames. This step is performed by a spatial aligner 112. The set of spatially aligned video frames are then fed to the temporal noise reducer 114 which performs temporal noise reduction on the spatially aligned video frames in order to produce a temporally noise reduced video frame, corresponding to the captured video frame. In this way, the image quality is improved.

In comparison to a method where global motion vectors are not used in the temporal noise reduction, this method has the advantage of being able to perform temporal noise reduction also in a case where the entire video frame has moved between two frames. Were the global motion vectors not used, the entire frame would likely be excluded from the temporal noise reduction as the local motion vectors would indicate movement in all pixels of the frame.

It may be noted that the temporal noise reduction may still calculate local motion vectors for the set of spatially aligned video frames, as it still would be advantageous to exclude pixels with local motion between frames. To illustrate this, one might picture the situation where the camera is placed on a pole which sways slightly in the wind, and a ball is thrown across the scene monitored by the camera. The global motion vectors will indicate that the entire video frame moves, but the pixels which represent the ball will still be associated with local motion vectors, and, hence, can be excluded from the temporal noise reduction.

Fig. 3 illustrates a captured video frame 302 and a partially overlapping, previously captured video frame 304 in a situation where global movement has occurred. In Fig. 3 both of the video frames 302 and 304 are captured within the same image sensor 103. The image sensor 103 in this case includes a border area 306 which may be seen as a buffert zone surrounding the captured frame. The buffert zone allows the image to move between two frames but still be captured in its entirety. When performing the spatial aligning, image data representing not only the previously captured frame 304 but also representing an area outside the previously captured frame 304 may be used, so that temporal noise reduction may be performed for the entire captured video frame, not only for those parts that actually overlap the previously captured video frame. Such a border area 306 or buffert zone may also be utilized for image stabilization purposes.

In Fig. 2, a method 200 of reducing noise in video frames captured by an image sensor of a monitoring camera is illustrated. In a first step 202, image data representing a captured video frame, and a previously captured video frame at least partially overlapping the captured video frame, is accessed. In step 204, motion data representing global motion vectors for the captured video frame in relation to the previously captured video frame is accessed. It may be noted that steps 202 and 204 may take place in any order, or even concurrently.

In step 206 the captured video frame and the previously captured video frame are spatially aligned to provide a set of spatially aligned video frames. This may either take place by the previously captured frame being spatially aligned to the captured video frame or the other way around. As a third option both frames may be affected by the aligning. The alignment may take place by shifting the affected frame/s in the x- and/or y-direction and the alignment may also include rotation of the affected frame/s. In case an image sensor border area is present, this may be used to provide a full overlap between the frames after the spatial aligning. In case such a border area is not available, only the overlapping parts of the frames will be included in the set of the spatially aligned video frames.

Finally, in step 208, temporal noise reduction is performed on the captured video frame using the spatially aligned set of video frames to provide a temporally noise reduced captured video frame. This temporally noise reduced video frame may then be fed to possible further image processing, such as object detection, or it may be shown to an operator.

In case the border area was not available for the temporal noise reduction, the temporally noise reduced video frame will obviously contain some parts where the temporal noise is not reduced according to the method presented herein, i.e. those parts for which it was not possible to perform the temporal noise reduction due to the lack of overlap. In other words, the image data in such parts of the video frame are those provided in the captured video frame, before the temporal noise reduction took place.

Obviously, the temporal noise reduction may be performed repeatedly on several video frames, where the captured video frame then will assume the role of a previously captured video frame. For sake of simplicity, only the process of performing the temporal noise reduction on one frame is described.

It may also be noted that the extension to using several previously captured video frames, or even future frames, in the temporal noise reduction presented herein, is straight forward. In case future video frames are to be used, a slight delay in producing the temporally noise reduced captured video frame will obviously occur as one or more of such future video frames first have to be captured.

To summarize, noise is reduced in video frames captured by an image sensor 103 of a monitoring camera 100, by using image data representing a captured video frame 302 and image data representing a previously captured video frame 304 at least partially overlapping the captured video frame 302, as well as motion data representing global motion vectors for the captured video frame 302 in relation to the previously captured video frame 304. The captured video frame 302 and the previously captured video frame 304 are spatially aligned using the global motion vectors to provide a set of spatially aligned video frames, and temporal noise reduction is performed on the captured video frame using the spatially aligned set of video frames to provide a temporally noise reduced captured video frame.

## Claims

1. A method of reducing noise in video frames captured by an image sensor of a monitoring camera, comprising the steps of:
accessing (202) image data representing a captured video frame,
accessing (202) image data representing a previously captured video frame at least partially overlapping the captured video frame,
accessing (204) motion data representing global motion vectors for the captured video frame in relation to the previously captured video frame,
spatially aligning (206) the captured video frame and the previously captured video frame using the global motion vectors to provide a set of spatially aligned video frames, and
performing (208) temporal noise reduction on the captured video frame using the spatially aligned set of video frames to provide a temporally noise reduced captured video frame.

2. The method of claim 1, further comprising the step of performing image stabilization of the captured video frame, wherein the global motion vectors are established as part of the image stabilization step.

3. The method of any of the above claims, wherein the step of performing temporal noise reduction comprises
accessing data representing local motion information for the captured video frame in relation to the previously captured video frame, and
excluding areas of the captured video frame from the temporal noise reduction where the local motion information indicates a moving object.

4. The method of any of the above claims, wherein the step of performing temporal noise reduction further comprises
providing the temporally noise reduced video frame by calculating an average of the set of spatially aligned video frames.

5. The method of any of the above claims, wherein the step of spatially aligning the captured video frame and the previously captured video frame comprises accessing image data from an image sensor border area provided for image stabilization purposes.

6. A video noise reducer for reducing noise in video frames captured by an image sensor of a monitoring camera, comprising
an image data input (106) arranged to receive information representing a captured video frame (302) and a previously captured video frame (304) at least partially overlapping the captured video frame (302),
a motion data input (108) arranged to receive information representing global motion vectors for the captured video frame (302) in relation to the previously captured video frame (304),
a spatial aligner (112) arranged to spatially align the captured video frame (302) and the previously captured video frame (304) using the global motion vectors to provide a set of spatially aligned video frames, and
a temporal noise reducer (114) arranged to perform temporal noise reduction on the captured video frame (302) using the spatially aligned set of video frames to provide a temporally noise reduced captured video frame.

7. The video noise reducer of claim 6, wherein
the motion data input (108) is further arranged to receive data representing local motion information for the captured video frame in relation to the previously captured video frame, and
the temporal noise reducer (114) is further arranged to exclude areas of the captured video frame from the temporal noise reduction where the local motion information indicates a moving object.

8. The video noise reducer of claim 6 or 7, wherein
the temporal noise reducer (114) is arranged to provide the temporally noise reduced captured video frame by calculating an average of the set of spatially aligned video frames.

9. The video noise reducer of any of claims 6-8, wherein
the image data input (106) is further arranged to receive image data captured by an image sensor border area (308), and
the spatial aligner (112) is further arranged to use image data from the image sensor border area (308).

10. A monitoring camera comprising
an image sensor (103), and
a video noise reducer (104) according to any of claims 7-9.

11. The monitoring camera of claim 10, further comprising
an image stabilizer (110) arranged to perform image stabilization of the captured video frame (302), and to establish the global motion vectors as part of the image stabilization.

12. The monitoring camera of claim 10 or 11, wherein the image sensor (103) comprises a border area (306) provided for image stabilization purposes.
